# EUROPEAN PATENT SPECIFICATION

(11) **EP 1 994 462 B1**
(45) Date of publication and mention of the grant of the patent: **18.05.2011**
(21) Application number: 06821059.0
(22) Date of filing: 13.12.2006
(51) Int. Cl.: G06F 3/01, G06F 1/16, H04M 1/02

(54) **ELECTRONIC EQUIPMENT WITH DATA TRANSFER FUNCTION USING MOTION AND METHOD**
ELEKTRONISCHE GERÄTE MIT EINER BEWEGUNG VERWENDENEN DATENTRANSFERFUNKTION UND VERFAHREN
EQUIPEMENT ELECTRONIQUE AVEC FONCTION DE TRANSFERT DE DONNEES UTILISANT LE DEPLACEMENT ET PROCEDE

(30) Priority: 10.03.2006 US 373655; 02.11.2006 US 555844
(43) Date of publication of application: 26.11.2008
(73) Proprietor: Sony Ericsson Mobile Communications AB, 221 88 Lund (SE)
(72) Inventor: HERMANSSON, Jonas, Gunnar, SE-16856 Bromma (SE); OIJER, Sten, Fredrik, SE-23431 Lomma (SE)
(74) Representative: VALEA AB
(86) International application number: PCT/IB2006/003595
(87) International publication number: WO 2007/105032

(56) References cited:
- EP-A- 1 132 933
- WO-A-2004/075169
- WO-A-2006/127270
- US-A1- 2004 139 217
- US-A1- 2005 101 314
- US-A1- 2005 212 750
- US-A1- 2005 222 801
- US-A1- 2006 005 156

## Description

### TECHNICAL FIELD OF THE INVENTION

The present invention relates generally to electronic equipment, and, more particularly, to electronic equipment with data transfer function using motion and method of transfer using motion, e.g., shaking or other intended motion, for identification.

### DESCRIPTION OF THE RELATED ART

Many mobile phones, personal digital assistants (PDAs), and other electronic equipment have phone books (sometimes referred to as address books, contacts, etc. (collectively referred to as "phone book" for convenience)) stored in them, e.g., in an electronic memory or in some other storage mechanism. A phone book may include the name of one or more persons, companies, or other entities and the relevant telephone number(s), e.g., home, work, mobile, etc., postal address(es), email address(es), and/or other information pertaining to the respective person, company, etc. Such a person, company, etc. may be referred to as a contact and the term contact information sometimes is used to refer to the pertinent information for that contact. Also, sometimes the collection of the name and the relevant contact information for a given person, company, etc. is referred to collectively as a contact. For example, on a display menu or special key of a mobile phone is the label "contacts," and executing the "contacts" function would bring up a phone book listing names, etc., as is well known. Sometimes a mobile phone includes a personal contact, for example, the name of the owner of the mobile phone and other pertinent information, such as, for example, the owner's telephone number(s), address(es), email address(es), etc. The personal contact information may be analogous to a typical business card or may include more or less information than a business card.

Mobile phones, PDAs and other electronic equipment have the ability to transfer contact information from one to another, e.g., using Bluetooth, infrared (IR), or another mechanism. It is somewhat inconvenient to transfer contact information between mobile phones, PDAs and/or other electronic equipment, whether that transfer is of one or more contacts or of personal contact information. For example, using a Bluetooth approach to transfer contacts between two mobile phones, it usually would be necessary to turn on the Bluetooth functions of both mobile phones, to wait a period of time for one mobile phone to detect the nearby mobile phones with Bluetooth activated, select the desired mobile phone for connection, and then transmit the contact information to that mobile phone. If the incorrect mobile phone mistakenly were selected, the contact information may be sent to an incorrect mobile phone, which is a possible security problem. Also, the time it would take to turn on the Bluetooth function; to select the correct mobile phone and to undertake the transfer function is relatively lengthy. Furthermore, it is not always clear or easily known what steps or functions need to be taken and which menus need to be traversed to transfer contact information from one mobile phone, PDA or other electronic equipment to another. Therefore, sometimes the steps are not taken and instead a more labored approach is used manually entering in one mobile phone, etc. data that is visually read from another mobile phone, etc. Similar issues may exist with other electronic equipment. Although the above issues are described with respect to transferring contact information between electronic equipment, it will be appreciated that similar or same issues may arise with respect to transferring other information, data, images, music, programs, etc. between electronic equipment.

As used herein, the terms contacts, contact information, information, phone books, address books, calendars, settings (e.g., phone settings, preferences, display screen settings, soft key settings, ring tone settings, etc.), business cards, cards, data, content images, videos, movies, music, documents, programs and the like may be interchangeable in the sense that these may be transferred, copied or the like from an electronic equipment to another electronic equipment. For the sake of brevity, the terms "contact," "contact information" and "information" may be used herein to represent each of the foregoing that is able to be transferred, copied or the like from an electronic equipment to another electronic equipment.

### SUMMARY

In view of the aforementioned shortcomings associated with conventional approaches to transfer there is a need in the art to facilitate transferring information and the like between electronic equipment. There also is a need to improve security for transferring information between electronic equipment.

An aspect of the present invention relates to an electronic equipment including a transducer; wherein the transducer is operable to detect motion of the electronic equipment, and a transmitter responsive to detected motion to transmit information (data or program) from the electronic equipment.

According to another aspect, a detector is responsive to a signal representative of motion of another electronic equipment, and wherein the transmitter is responsive to a prescribed relationship between motion detected by the transducer and a signal representative of motion of another electronic equipment to transmit information.

According to another aspect, in response to such prescribed relationship the transmitter transmits information via a secure communication link to such another electronic equipment.

According to another aspect, the electronic equipment is a mobile phone and said another electronic equipment is a mobile phone.

According to another aspect, the electronic equipment is at least one of a mobile phone and a PDA and the another electronic equipment is at least one of a mobile phone and a PDA.

According to another aspect, the transducer is operable to detect shaking.

According to another aspect, the transducer comprises an accelerometer.

According to another aspect, the transducer comprises a signal conditioning circuit to filter out signals representing motion not representative of intended motion of the electronic equipment.

According to another aspect, the signal conditioning circuit comprises a low pass filter.

According to another aspect, the transmitter comprises a short distance transmitting device.

According to another aspect, transmitter comprises a Bluetooth communication device.

US 20041139217 A1 discloses electronic devices that have orientation sensors that detect tilting of the devices; the devices are tilted relative to each other to control the rate at which data is transferred from one device to the other. WO 2004/075169 discloses using infrared communication between two electronic devices to set up a key; after a button is pressed to initiate identification and key exchange between devices, shaking is used to transfer data from one device to the other. EP 1 132933 discloses a pairing process between two devices in which a PIN code is selected for secure communication between the device.

The European patent application based on WO 2006/127270A1 is a prior right document which is not relevant for assessment of inventive step. This prior right document shows an information exchange system. Information is exchanged with devices having matching movements, wherein the matching movements can include being struck together, being moved in gestures that simulate any number of activities such as throwing and catching and being tapped some number of times.

According to another aspect, the transmitter comprises an infrared communication device

According to another aspect, the transmitter comprises a WLAN communication device.

According to another aspect, a transducer function is carried out based on signal variation detection.

According to another aspect, a further electronic equipment is included, and both the electronic equipment including detector circuitry operable to detect the occurrence of at least substantially the same motion of the electronic equipment to initiate a pairing of the electronic equipment.

According to another aspect, in response to pairing detector circuitry transfers information between electronic equipment.

According to another aspect, transferring information between or among electronic equipment comprises transferring at least one of settings, contacts, address book, or contacts.

Another aspect of the invention relates to electronic equipment, including a transducer, wherein the transducer detects motion of the electronic equipment, a detector responsive to a signal representative of motion of another electronic equipment, and a transmitter responsive to a prescribed relationship between motion detected by the transducer and a signal representative of motion of another electronic equipment to transmit information (data or program) for receipt by such another electronic equipment.

Another aspect of the invention relates to a method of transmitting information, including moving an electronic equipment, detecting such moving, and in response to the moving of a prescribed character transmitting information.

Another aspect of the invention relates to a method of transferring information between electronic equipment, including moving at least two electronic equipment simultaneously to establish communication between such electronic equipment, and transferring information from at least one of such electronic equipment to another of such electronic equipment.

Another aspect relates to detecting the character of movement of one of such electronic equipment, comparing such movement with a signal representing the character of movement of such another electronic equipment, and in response to such movements being at least substantially the same the transferring information comprising transmitting information from one electronic equipment to the other.

Another aspect relates to the moving comprising manually moving.

Another aspect relates to the moving comprising manually shaking.

According to another aspect variations in signals produced by two electronic equipment are used in determining whether to establish communication therebetween.

Another aspect of the invention relates to a computer program operable in electronic equipment, including code to operate the electronic equipment to detect the character of motion of such electronic equipment; code to cause comparing of the character of motion of such electronic equipment with a motion signal representing motion of another device, code for causing information to be transferred from one electronic equipment to another electronic equipment when the character of motion of such electronic equipment and such motion signal represent substantially the same motion.

Another aspect relates to the pairing of two or more electronic equipment based on motion of the electronic equipment to enable or to facilitate transferring information between or among the electronic equipment.

Another aspect relates to Bluetooth pairing of two or more electronic equipment based on motion.

To the accomplishment of the foregoing and related ends, the invention, then, comprises the features hereinafter fully described and particularly pointed out in the claims. The following description and the annexed drawings set forth in detail certain illustrative embodiments of the invention. These embodiments are indicative, however, of but a few of the various ways in which the principles of the invention may be employed. Other objects, advantages and novel features of the invention will become apparent from the following detailed description of the invention when considered in conjunction with the drawings.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### BRIEF DESCRIPTION OF THE DRAWINGS

In the annexed drawings several exemplary embodiments of the invention are illustrated, it being understood that such illustrations are not necessarily to scale.
Fig. 1 is schematic illustration of two mobile phones held together for common motion; .
Fig. 2 is a schematic block diagram illustrating a method in accordance with an embodiment of the present invention;
Fig. 3 is a schematic block diagram of a number of exemplary relevant portions of the respective mobile phones of Fig. 1 in accordance with an embodiment of the present invention;
Figs. 4, 5 and 6 are, respectively, schematic illustrations of motion transducers providing for motion detection based on threshold, amplitude, or frequency;
Fig. 7 is a schematic flow chart representing the relevant operation of the electronic equipment in accordance with an embodiment of the present invention;
Fig. 8 is a schematic illustration of a menu of functions able to be presented on a display of electronic equipment in accordance with an embodiment of the invention;
Fig. 9 is a schematic illustration of two personal digital assistants (PDAs) held together for common movement; and
Fig. 10 is a schematic flow chart representing the relevant operation of the electronic equipment in accordance with another embodiment of the present invention.

### DETAILED DESCRIPTION OF EMBODIMENTS

The present invention will now be described with reference to the drawings, wherein like reference numerals are used to refer to like elements throughout.

The term "electronic equipment" includes portable radio communication equipment. The term "portable radio communication equipment," which hereinafter is referred to as a "mobile radio terminal," "mobile phone," "mobile device," or "mobile terminal" and the like, includes all equipment such as mobile telephones, pagers, communicators, i.e., electronic organizers, personal digital assistants (PDAs), smartphones, portable communication apparatus or the like: The term "electronic equipment" also may include portable digital music devices, e.g., iPod devices, mp3 players, etc. A portable radio communication device may also be a portable digital music device.

In the present application, the invention is described primarily in the context of a mobile telephone. However, it will be appreciated that the invention is not intended to be limited to a mobile telephone and can be any type of electronic equipment.

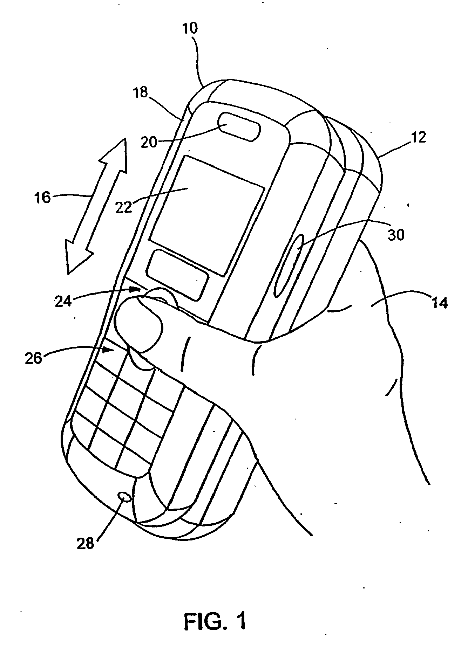

Referring initially to Fig. 1, electronic equipment 10 and electronic equipment 12 are illustrated being held in a hand 14 of a person. A double-ended arrow 16 represents motion of the electronic equipment 10, 12 as they are moved together by the hand 14. In the exemplary embodiment illustrated in Fig. 1 and described herein, the electronic equipment 10, 12 are mobile phones (also referred to as mobile telephones and sometimes referred to as cell phones, satellite phones, and by other terminology, as will be appreciated by those having ordinary skill in the art). Although the invention is described with respect to mobile phones, and the electronic equipment 10, 12 will be referred to below as mobile phones, it will be appreciated that the invention is applicable to other electronic equipment, such as, for example, personal digital assistants (PDAs), wireless phones, and other electronic equipment, whether currently existing or developed in the future, and several non-limiting examples are mentioned elsewhere herein.

From the description summarized above and described in further detail below, it will be appreciated that short distance (or other) communication capability between mobile phones may be used to transfer data information between mobile phones. Using motion sensing and comparing functions of the present invention, a communication connection or link and an appropriate communication protocol can be established between mobile phones, and the fact that a given mobile phone is connected to a correct other mobile phone, e.g., the security of the connection between the mobile phones, can be assured. Upon establishing the connection and the appropriate communication protocol between the desired mobile phones, whether two or more, the short distance communication mechanism mentioned above, e.g., Bluetooth, IR, wireless local-area network (WLAN) or some other, may be used to transfer information from one mobile phone to the other mobile phone(s). The communication link and/or protocol are so established between the mobile phones that undergo the same, at least substantially the same, or similar motion to the exclusion of other mobile phones that are not undergoing such motion.

The mobile phones 10, 12 are shown as having a "brick" or "block" design type housing 18, but it will be appreciated that other type housings, such as, for example, clamshell or slide-type housings, may be utilized without departing from the scope of the invention. The mobile phone 10 includes housing 18 (sometimes referred to as a case), speaker 20, display 22, navigation switch and selection/function keys or switches 24, key pad 26, microphone 28, and volume control slide switch 30; these are illustrative and exemplary of parts of atypical mobile phone, but it will be appreciated that other parts that are sim ilar or different in form and/or function may be included in the mobile phone 10. The mobile phone 12 may be the same as, similar to or even different from the mobile phone 10, although for convenience of illustration the two mobile phones are shown having a similar shape. The mobile phones to which the invention pertains also may be of the types that have more or fewer functions, keys, etc. compared to those illustrated and described in detail herein.

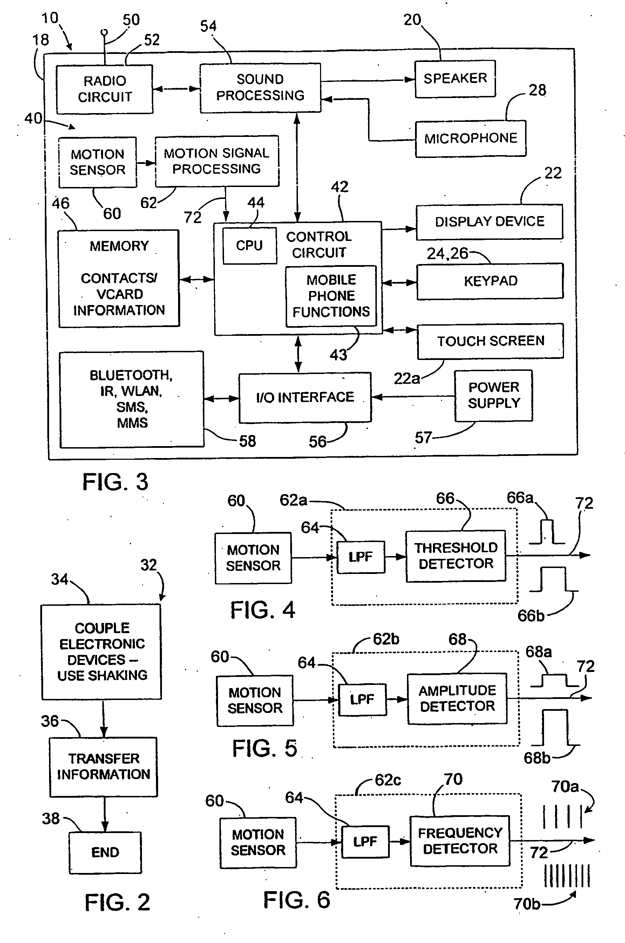

As will be appreciated, the mobile phones 10, 12 may function as conventional mobile phones. The mobile phones 10, 12 may have additional functions and capabilities that may be developed in the future. From a conventional point of view, the display 22 displays information to a user, such as operating state, time, phone numbers, contact information, various navigational menus, etc. which facilitate and/or enable the user to utilize the various features of the mobile phone. Part or all of the display 22 may be a touch screen type device 22a (Fig. 3). The navigation and function keys 24 and the keypad 26 may be conventional in that they provide for a variety of user operations. For example, one or more of the function keys and navigation device 24 may be used to navigate through a menu displayed on the display 22 to select different phone functions, profiles, settings, etc., as is conventional. The keypad 26 typically includes one or more special function keys, such as, a "call send" key for initiating or answering a call, a "call end" key for ending or hanging up a call, and dialing keys for dialing a telephone number. Other keys included in the navigation and function keys 24 and/or keypad 26 may include an on/off power key, a web browser launch key, a camera key, a voice mail key, a calendar key, etc. The volume control switch 30 may be operated to increase or to decrease the volume of the sound output from the speaker 20. If desired, a sensitivity control also may be provided to change the sensitivity of the microphone 28 as it picks up sounds for transmission by the mobile phone 10. The mobile phone 10 may have more of fewer keys, navigation devices, etc. compared to those illustrated.

Briefly referring to Fig. 2, a method of using and carrying out the invention is illustrated schematically in a blocked diagram 32. At step 34 (sometimes referred to as block e.g., as a block in a flow chart, function diagram or logic diagram, etc.) the mobile phones 10, 12 are coupled using detection of motion, as will be described further below. A user, whose hand 14 is holding the mobile phones 10, 12 together, may move the phones together in a common path, common motion, common frequency, common amplitude or duration, etc., and the common motion or movement pattern of the mobile phones may be detected or recognized by the respective phones and indicated by each of the mobile phones to the other, and with that indication of the intended motion being provided, a communications protocol or link may be established between the two mobile phones. Such detection and recognition may be effected by respective accelerometers or other transducers and appropriate circuitry and/or programming or logic in the respective mobile phones. When an appropriate common movement pattern is recognized by the mobile phones, thus identifying them to each other, appropriate action may be initiated to effect sharing, transferring, or exchanging information locally from one mobile phone to the other (or among more than two mobile phones). Such transferring of information may provide information from one mobile phone to another and also may synchronize information of the phones so they have the same information, settings, etc., and so on. At block 36 information is transferred between mobile phones 10, 12. The information may be data, e.g., contact information pertaining to one or more contacts, and any other information, as may be desired, e.g., non-limiting examples of which are mentioned above. Other information that may be transferred, also referred to as exchanged, between respective mobile phones may be, for example, calendars, phone settings, e.g., ring tones, sound amplitude, display screen brightness, various preferences, and the like. At block 38 the data transfer or exchange has been completed and the coupling of the two mobile phones may be ended.

Thus, it will be appreciated that motion may be used to establish that the two mobile phones are to be connected in the sense of providing a communications link with appropriate communications protocol between the phones to transfer data from one to the other or from each to the other. The motion may be a shaking motion, an acceleration, moving the phones toward each other, or some other type of intended motion. Intended motion means that motion intended so as to carry out the functions of the invention as compared to casual motion occurring due to walking, jogging or even riding in a vehicle or as compared to random motion, such as raising a mobile phone to the ear of a user or some other type of motion that may be considered noise or the like. Holding the two mobile phones 10, 12 in one hand 14 of a user facilitates obtaining the intended motion in common and simultaneously for both mobile phones. The invention is illustrated with two mobile phones held in the hand 14, but it will be appreciated that the two mobile phones may be held in some other device that provides for common intended motion to facilitate establishing a communication between the two mobile phones. Furthermore, although the invention is illustrated with two mobile phones 10, 12, it will be appreciated that the invention may be used with more than two mobile phones.

For reasons that will be explained more fully below, the invention overcomes the aforementioned shortcomings associated with existing electronic equipment between which data is to be transferred. The mobile phones 10, 12 include motion sensing capability and the ability to transmit it signals representing the motion so that communication between the two mobile phones for information transfer purposes can be achieved efficiently and securely knowing that the correct mobile phones are and will be communicating with each other for information transfer function.

Fig. 3 represents a functional block diagram of an exemplary mobile phone, for example, the mobile phone 10. The representation also may be for the mobile phone 12 and for other mobile - phones, too. The representation also is similar to those of PDAs and/or other electronic equipment, as will be appreciated by those having ordinary skill in the art. The construction of the mobile phone 10, which is presented by way of example here, is generally conventional with the exception of the capability provided by a motion transducer 40 and use of information provided by the motion transducer, as are described in greater detail below. The various functions carried out by the parts represented in the functional block diagram of Fig. 3 may be carried out by application software within the mobile phone 10. However, it will be apparent to those having ordinary skill in the art that such operation can be carried out via primarily software, hardware, firmware, or a combination thereof, without departing from the scope of the invention.

The mobile phone 10 includes a primary control circuit 42 that is configured to carry out overall control of the functions and operations of the mobile phone 10, e.g., as is represented at block 43. The control circuit 42 may include a CPU 44 (central processor unit), microcontroller, microprocessor, etc., collectively referred to herein simply as CPU 44. The CPU 44 executes code stored in memory within the control circuit 42 (not shown) and/or in a separate memory 46 in order to carry out conventional operation of the mobile phone functions within the mobile phone 10. In addition, the CPU 44 executes code stored in the memory 46, for example, or in some other memory (not shown) in accordance with the present invention in order to perform the various functions of detecting motion based on signals provided by the motion transducer 40, detecting characteristics of signals representing motion of another mobile phone, carrying out comparisons of the motion signals or information, e.g., as a comparator, and controlling transfer of information between the mobile phones when appropriate motion information has been received.

Continuing to refer to Fig. 3, the mobile phone 10 includes a conventional antenna 50, radio circuit 52, and sound processing signal circuit 54, all of which are cooperative to send and to receive radio frequency (or other) signals in conventional manner. For an incoming signal, for example, the sound processing signal circuit 54 may include an amplifier to amplify the signal and to provide it to the speaker 20 so a user may hear the sound, and the sound processing signal circuit 54 also may use the same amplifier or another amplifier to amplify signals from the microphone 28 for transmitting thereof via the radio circuit 52 and antenna 50 to another mobile telephone, to a cellular phone tower, to a satellite, etc. Operation of the radio circuit 52, sound processing signal circuit 54, speaker and microphone, are under control of the control circuit 42, as is conventional.

The mobile phone 10 includes the display device 22, keypad 24, 26 (including the navigation device mentioned above), and the capability of a touch screen 22a, which may be part or all of the display device 22, as is conventional; and these are coupled to the control circuit 42 for operation in conventional manner.

As was mentioned above, the mobile phone 10 includes a memory 46. The memory 46 may include a phone book for the mobile phone, and in the phone book, for example, are contacts or information pertaining to contacts. Sometimes such information is in the form of a VCARD. In using the mobile phone 10, a user may use the keys and navigation device 34, 26 and/or touch screen 22a to provide inputs to the control circuit 42 to access contacts in the memory 46 and/or to add or to delete contacts, to add , delete or change information pertaining to a contact, and/or to select a contact to cause the mobile phone to dial the telephone number of the contact, to send an email to the contact, to display an image of the contact, or for some other purpose. One of the contacts may be a personal contact, which includes information pertaining to the owner of the mobile phone, e.g., the owner's name, address(es), telephone number, email address(es), etc:

As is illustrated in Fig. 3, the mobile phone 10 includes an input/output interface 56, a power supply 57, and a short distance communications mechanism 58, for example a Bluetooth communications device, infrared (IR) communications device, or some other device. Another example of a short distance communications mechanism is wireless local area network (WLAN), and the invention also may use still other short distance communications mechanisms or devices that currently exist or may be developed in the future. The short distance communications mechanism 58 may transmit and receive signals using SMS (short message service), MMS (multimedia messaging service) or some other communications mechanism and protocol. Bluetooth, IR, WLAN communications for communicating over short distances between mobile phones are well know; other mechanisms may exist and/or may be developed in the future, and these may be utilized by and are included for use in the invention.

Turning to Figs. 4,5 and 6, several examples of motion transducers 40 are illustrated. The motion transducer 40 shown in Fig. 4 includes a motion sensor 60, for example, an accelerometer or an acceleration transducer. The motion transducer 40 also may include signal processing circuitry, for example, motion signal processing circuit 62, which is described below. An accelerometer may provide a signal output, e.g., an electrical signal, representing acceleration of the transducer. The accelerometer may be in the case or housing 18 of the mobile phone 10. An accelerometer is useful to produce signals representing motion occurring as a user shakes the mobile phone back and forth while holding the mobile phone in the hand 14. The transducer may be a position sensor type transducer or a rotation sensing transducer, either of which may provide a signal output, e.g., an electrical signal, that represents the motion of or changes in location or orientation of the mobile phone. Still another example of a transducer may be a proximity sensor, whereby the sensor provides a signal output representing the proximity of the mobile phone to another object or even to another mobile phone. For example, using proximity sensors in the mobile phones 10, 12, one could hold them in different respective hands and move them toward or away from each other, and in such case the respective proximity sensors also would provide the same or substantially the same outputs, which would change as the mobile phones are moved toward or away from each other, to indicate that these are the two mobile phones that are to be coupled by appropriate communication protocol for information transmission between them.

It will be appreciated that a motion transducer may be any device, circuit or other mechanism or combination thereof that provides an indication that motion has been sensed and/or provides an indication of the character of the motion, such as, for example, acceleration, velocity, direction, path length, arc size, centripetal force, directional change or any other characterization of the motion. Note that arc size may not be exactly the same for two mobile phones that are held in a user's hand and moved together because it is likely that one mobile phone will move through a shorter radius arc than the other; according to the invention, though, such motion would be sufficiently similar as to allow for mutual detection and pairing of the mobile phones. An example, as is mentioned above, is an accelerometer that provides an electrical output (or some other output) in response to acceleration. Another example is a velocimeter that provides an output representative of velocity. Still another example is a signal detector that responds to changes in electrical signals, radio frequency signals, or some other signals, such as amplitude or frequency or changes therein, Doppler shift, or some other discernible change that occurs due to motion.

Another example of a motion transducer is a small generator, e.g., an electric generator. An example of such a generator is the type currently used in Seiko Kinetic wrist watches and chronometers. Such a generator may generate an electrical output in response to motion. The character of the electrical output from a small generator, e.g., duration, amplitude, frequency, or some other character, may be used to represent motion of the mobile phone.

Still another motion detection embodiment may use a Bluetooth system (or some other system) to detect signal variations or relationships. For example, with the Bluetooth radios turned on for both mobile phones 10, 12, the radios and associated circuitry, e.g., motion signal processing circuitry 62, may be used to detect variations (or lack thereof) in the signals of one mobile phone and received from the other mobile phone. Examples of signal variations may be Doppler shift, amplitude changes, frequency changes, etc., or lack thereof. For example, if the mobile phones 10, 12 are held in one hand as they are moved together, it is likely that there would be no change in the relationship of the two signals, and this would indicate correct phone with which to establish information transfer. In contrast, it is likely that rather substantial signal variations would occur in a comparison with signals from another phone, for example, one more remote from the two mobile phones that are held together, and this substantial variation would indicate that such another phone should not receive the information transfer. Another example that may be useful in carrying out the invention would be a case in which the variation between signals in one mobile phone and those received from another mobile phone is within certain bounds, parameters or limits caused by a relative movement between the mobile phones between which information is to be transferred; and if the variation is within allowable limits, etc., the information transfer would be permitted. The foregoing uses of signal variations as just described may be used with our without a separate motion transducer device, such as an accelerometer, to identify mobile phones between which information may be transferred based on motion to establish a secure communication between the mobile phones.

The motion transducer 40, as is shown in respective embodiments of Figs. 4, 5 and 6, also includes a motion signal processing circuit, which is designated generically 62 in Fig. 3 and is designated individually 62a, 62b, 62c, respectively, in Figs. 4, 5 and 6. The motion sensor 60 produces an output indicative of motion of the mobile phone 10. This output is provided to the motion signal processing circuit 62 that processes and conditions the signal prior to being input to the control circuit 42. For example, the motion signal processing circuit 62 provides a motion signal to the control circuit 42 to indicate at least one of that motion has been detected, characteristics of that motion, e.g., duration of the motion, amplitude of the motion, frequency (e.g., changes of direction) of the motion, etc. and/or that motion has ceased. The motion signal processing circuit 62 may filter the output of the motion sensor 60 or otherwise may condition the output using known techniques such that the indication of motion or an appropriate signal to represent motion to the control circuit 42 only is provided in instances where the user decidedly moves the mobile phone 10 in a prescribed manner, e.g., in a back and forth shaking motion or in some other prescribed manner, such as was described above or some other manner. Such motion is referred to as intended motion. The motion signal processing circuit 62 may block from the control circuit 42 signals representing brief or casual movement of the mobile phone 10, e.g., as a result of being dropped, carried by a user while walking or jogging, bouncing in a moving vehicle, etc. Therefore, the motion signal processing circuit 62 preferably requires that the output from the motion sensor 60 be maintained for at least a predetermined time, amplitude and/or frequency prior to issuing a motion indication, e.g., that intended motion has been detected, to the control circuit 42. Alternatively, the motion signal processing circuit 62 may provide inputs to the control circuit 42 and the control circuit 42 may include appropriate circuitry and/or program code to effect the desired filtering, e.g., as was just described, to avoid false indications of motion detection of a type that would allow for connecting of the cell phones 10, 12, for example.

With the above in mind, then, each of the motion signal processing circuits 62a, 62b, 62c shown in Figs. 4, 5 and 6 includes a low pass filter 64 and either a threshold detector 66, amplitude detector 68 or frequency detector 70. In an another embodiment the motion signal processing circuit may include a combination of two or more of the detectors 66, 68, 70. The low pass filter 64 removes or blocks signals representing casual motion or noise or spurious signals representing brief, unintended movement of the mobile phone 10 or casual movement of the mobile phone, such as may occur during walking, jogging or bouncing in a moving vehicle. The threshold detector 66 is designed to output an appropriate motion signal on line 72, which is coupled as an input to the control circuit 42, when motion of a relatively long duration occurs, e.g., probably not due to casual motion, noise or the like. In response to such motion signal the control circuit 42 effects operation of the mobile phone 10 to transmit data to another mobile phone, e.g., mobile phone 12, and/or to receive data from such other mobile phone. The threshold detected by the threshold detector 66 may be represented by pulse width of signals input thereto, and the output therefrom may be representative of such pulse width, as is represented by the relatively short and long pulse width signals 66a, 66b. The signal provided on line 72 to the control circuit 42 may be of a shape, form, duration, etc., similar to the signals 66a, 66b, may be respective high or low signals, depending on the duration of the signals 66a, 66b, may be a digital signal value of a prescribed number of data bits in length, or may be of some other character that is suitable to effect a desired operation of the control circuit 42 depending on whether or not intended motion that is to cause communication between mobile phones has been detected. As several examples, the cutoff or distinguishing duration of pulse widths representing the motion detected to distinguish between intended motion and casual motion or noise may be from about a fraction of a second to up to three or four seconds; these are just exemplary and the duration or pulse width of occurrence of such motion may be more or less.

As another example of motion signal processing circuit 62b, there is illustrated in Fig. 5 a low pass filter 64 and an amplitude detector 68. The amplitude detector 68 provides an output on line 72, e.g., of a type suitable for the control circuit 42 to understand and to operate based on whether intended or prescribed motion has been detected or has not been detected. For example, casual motion or noise may produce a relatively low amplitude signal 68a as input or output from the amplitude detector; and intended or prescribed motion may produce a relatively larger amplitude signal 68b as input or output to/from the am plitude detector 68.

Still another example of motion signal processing circuit 62c is illustrated in Fig. 6 as a low pass filter 64 and a frequency detector 70. The frequency detector 70 provides an output on line 72, e.g., of a type suitable for the control circuit 42 to understand and to operate based on whether intended or prescribed motion has been detected or has not been detected. For example, casual motion or noise may produce a relatively low frequency signal 70a or respond to a relatively low frequency signal 70a, respectively, as output from or input to the amplitude detector. A relatively higher frequency signal 70b input to and/or output from the frequency detector 70 representing detection of intended motion, may be provided to the control circuit 42.

According to an embodiment of the invention, a mobile phone may operate to check for intended motion; and in response to detecting intended motion the mobile phone transmits information. It is noted here that a mobile phone is but one non-limiting example of an electronic equipment; which is more broadly defined above. In response to detecting intended motion the mobile phone transmits information. According to another embodiment, such information is transmitted to another mobile phone. According to still another embodiment in response to a mobile phone receiving information that its motion and the motion of another mobile phone are the same, or are at least substantially the same within predetermined parameters or limits of deviation, information may be transferred from one mobile phone to the other mobile phone and/or from each mobile phone to the other. Parameters may be predetermined, e.g., as a default condition as is set by a user, to determine what information is transmitted and whether information transmitted from one mobile phone to the other or from both mobile phones to the other mobile phone.

A person having ordinary skill in the art of computer programming and applications of programming for mobile phones would be able in view of the description provided herein to program a mobile phone 10 to operate and to carry out the functions described herein. Accordingly, details as to the specific programming code have been omitted for the sake of brevity. Also, while software in the memory 46 or in some other memory of the mobile phone may be used to allow the mobile phone to carry out the functions and features described herein in accordance with the preferred embodiment of the invention, such functions and features also could be carried out via dedicated hardware, firmware, software, or combinations thereof, without departing from the scope of the invention.

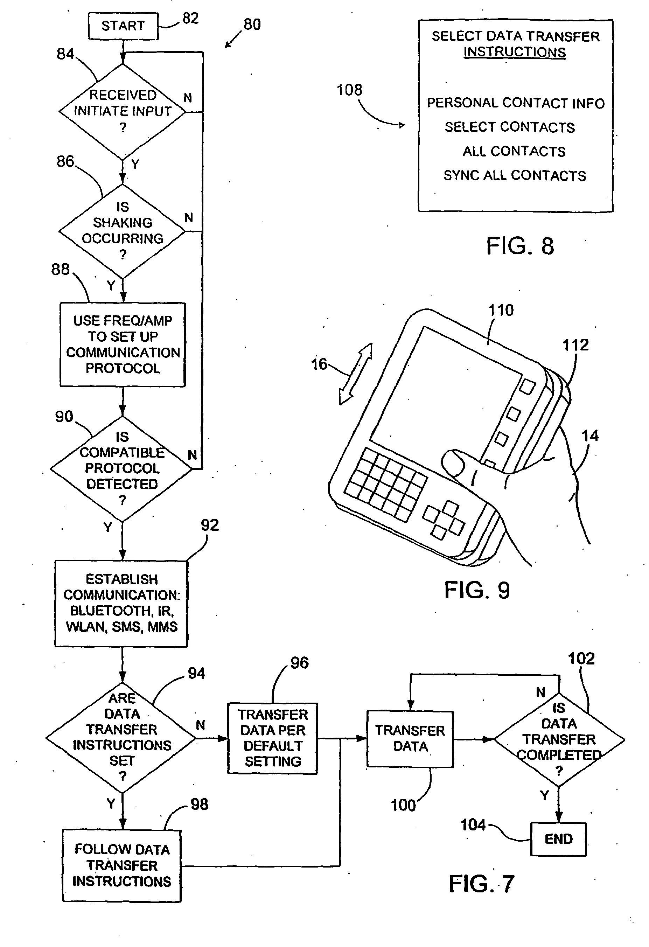

Fig. 7 illustrates a representative flow chart 80 showing an example of steps, functions and methods that may be carried out using the invention. The steps shown in the flow chart may be carried out using a mobile phone (or mobile phones), for example, of the type described herein or other type. Appropriate programming code may be written in an appropriate computer language or the like to carry out the steps, functions and methods as now are described with respect to Fig. 7. The steps shown in the flow chart are referred to below as blocks.

At block 82 the method starts. Starting may include turning on the cell phone (or both cell phones 10, 12, for example), and pressing an appropriate key to indicate that the motion responsive information transfer function(s) is(are) to be carried out. At block 84 an inquiry is made whether an initiate signal has been input, e.g., whether a key has been pressed, the mobile phone has been turned on, etc. If not, then the flow chart loops back to the input to block 84 until such initiate input is received.

At block 86 an inquiry is made to determine whether motion, e:g., shaking or other prescribed type of motion, for example, of the types described above, is occurring. If not, then a loop is followed back to block 24. It is noted here that the looping back as described here and with respect to other loops mentioned below, may be back to a beginning portion of the flow chart 80, e.g., to the input to block 84, or the loop may be back upstream in the flow chart to some other location. For example, the negative loop followed from block 86 may be back to the input of block 86 rather than to the input to block 84.

If shaking of the intended motion type is occurring as detected at block 86, then at block, 88 the threshold detector 66, amplitude detector 68 and/or frequency detector 70 determines whether such motion is intended motion. If it is not, then a loop is followed back to block 74; but if intended motion is detected, then at block 88 the output from the threshold, amplitude and/or frequency detector is provided to the control circuit 42 to set up a communication protocol and communication link at block to communicate with another mobile phone to transfer information as was described above.

At block 90 an inquiry is made whether a compatible protocol has been detected. A compatible protocol may be, for example, a signal representing the motion of another mobile phone for comparison with the detected motion of the current mobile phone to determine whether the motions are the same or are at least substantially the same within some parameters as may be predetermined by the mobile phone manufacturer, or may be determined by the user of the mobile phones. The compatible protocol may be a characteristic of information transmission passwords, handshaking, etc., that would be set up automatically by the respective control circuits 42 of the mobile phones 10, 12, for example, in response to intended motion being detected by both mobile phones. The compatible protocol may be a signal provided by a mobile phone in response to motion, e. g., shaking, thereof as a representation of that motion so that the mobile phone operating according to the flow chart 80 being described here can receive such signal and determine whether it is a representation of motion that is the same or substantially the same as had been detected at blocks 86, 88. If compatible protocol is detected at block 90, then at block 92 communication between the two mobile phones, e.g., mobile phones 10, 12, is established using a suitable transmission mechanism. Exemplary transmission mechanism for such purpose would be a short distance transmission mechanism such as, for example, Bluetooth, infrared or WLAN; and the communication may use SMS, MMS or some other suitable transmission protocol.

At the risk of repetition, it is noted that at block 90 a comparison may be made to determine whether the character of the motion of one mobile phone, e.g., mobile phone 10, and the character of a signal representative of motion of another mobile phone, e.g., mobile phone 12, are the same or are substantially the same within acceptable parameters or variations to confirm that the two mobile phones are the ones that are to communicate with each other for information transfer. If the two mobile phones 10, 12 are held in a person's hand and are shaken simultaneously, the detected motion by each mobile phone will be the same or at least substantially the same. Therefore, the signal received by one of the mobile phones as a representation of motion thereof is likely to be the same as a representation of motion, e.g., by a separate signal, of motion of the other mobile phone. Therefore, a user does not have to determine which mobile phone among several to connect with to effect a desired information transfer function. It also is likely that any other mobile phones within Bluetooth transmission range of the two just described mobile phones 10, 12, for example, would not be undergoing the same motion as the phones 10, 12; and, therefore, it is unlikely that a Bluetooth communications link for transmission of information to such other mobile phone(s).would be made. Thus, security of information transmission between mobile phones 10, 12 would be quite effective.

At block 94 an inquiry is made whether data transfer instructions have been set. If not, then at block 96 information (data, etc.) is transferred between the mobile phones 10,12, for example, according to a default setting, e.g., as may have been set by the mobile phone manufacturer or by some other entity. If the data transfer instructions have been set, e.g., see the description of Fig. 8 below, then at block 98 those data transfer instructions are followed. At block 100 information (data, etc.) is transferred, for example, from one mobile phone to the other or from both mobile phones to the other.

At block 102 an inquiry is made whether information (data, etc.) transfer has been completed. If not, then a loop is followed back to block 100 and the information transfer function continues until all information intended to be transferred has been transferred; and then the flow chart ends at block 104.

Briefly referring to Fig. 8, an exemplary menu 108 is illustrated. Such menu may be displayed on the display 22 of the mobile phone 10 or 12. Four functions are shown in the menu pertaining to data transfer instructions. Those functions may be selected using a stylus or finger pressing on a touch screen area where respective functions are shown or by navigating to and selecting a function using navigation device 24 and associated keys and/or keys 26 of the mobile phone keypad. If personal contact information is selected from the menu 108, then at block 98 the data transfer instructions are to transfer only the mobile phone user's personal contact information, e.g., name, address(es), telephone number(s), etc. from one mobile phone to the other. This is analogous to transferring an electronic business card from one mobile phone to the other. If the select contacts menu function is selected, then only those contacts that have been selected by the user, e.g., by highlighting them, setting some type of flag pertaining to them, categories of contacts, etc., would be transferred from one mobile phone to the other at block 100. If the all contacts menu function is selected, then all contacts stored in the phone book or memory 46, for example, of the mobile phone would be transferred at block 100 to the other mobile phone; this function may be particularly useful when providing contact information to a new mobile phone, when providing contact information to another mobile phone that is unlikely to have any or relatively few contacts in common with those being transferred to it. If the synchronize all contacts menu function is selected, then the contacts in both mobile phones 10, 12, for example, would be synchronized to update the information in both phone books; this function may be analogous to the synchronizing of a mobile phone or a PDA with a database that is contained in a computer, such as, for example, the Microsoft Outlook contacts database or the Palm Desktop Software database.

In Fig. 9 is illustrated a pair of PDAs 110,112 with which the invention may be used according to the description herein. The invention also may be used with a mobile phone and a PDA. For example, some people prefer to use a Blackberry communication device to exchange emails with respective contacts, but they prefer to use a mobile phone other than the Blackberry communications device for voice communication. Therefore, using the present invention information can be transferred, easily between such a Blackberry communication device and a mobile phone.

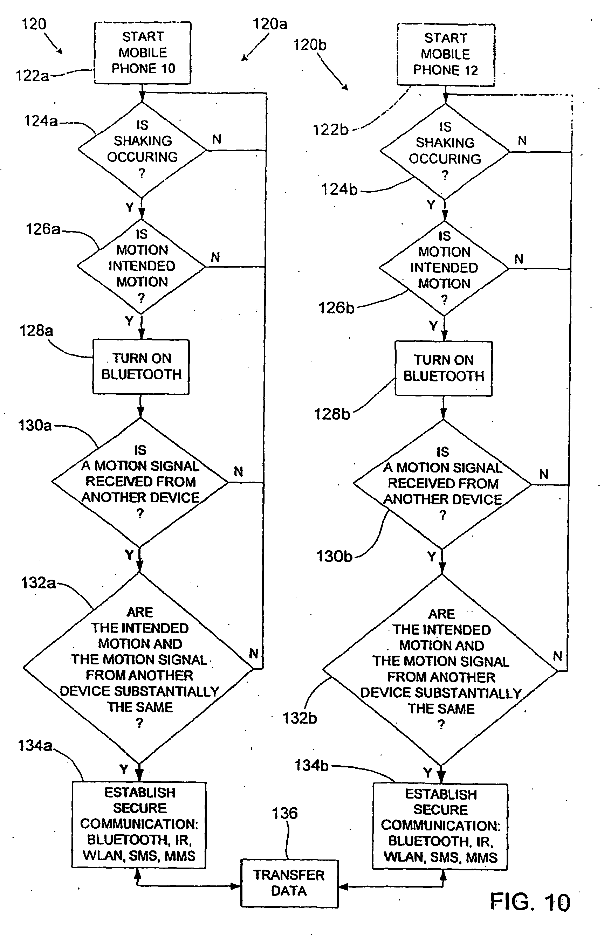

Another flow chart 120 is illustrated in Fig. 10 to depict another exemplary embodiment of operation of the invention apparatus and method according to the invention. The flow chart 120 has two parallel tracks 120a, 120b, respectively representing the operation of the mobile phones 10, 12, for example, as they are held in a user's hand 14 and moved, as by shaking them. At blocks 122a, 122b the two tracks of the flow chart 120 commence, e.g., upon turning on the mobile phones 10, 12. At blocks 124a, 124b an inquiry is made whether shaking (or some other motion) is occurring. If not, then a loop is followed back to the input to block 124a, 124b, respectively. If shaking or other motion is occurring, then at blocks 126a, 126b an inquiry is made whether the motion is intended motion, e.g., according to detection by the threshold, amplitude and/or frequency detectors 66, 68, 70 described above in the motion signal processing circuit 62 (Fig. 3). If the motion is not intended motion for a respective mobile phone 10, 12, then a respective loop is followed back to the input of block 124a or 124b. If the motion is intended motion, then at block 128 Bluetooth communication function is turned on (or some other short distance communication mechanism is turned on) so that a signal from the other mobile phone can be received for subsequent comparison.

At block 130a, 130b an inquiry is made whether the motion signal from another device, e.g., the other mobile phone, has been received via the turned on Bluetooth or other short distance communication, e.g., IR or WLAN. If not, then Bluetooth may be turned off (or not, as desired), and a loop is followed back to a respective block 124a, 124b. The Bluetooth function may be turned off when no signal has been received or it may be turned off based on a timer that is part of the control circuit 42 or a separate timer; or the Bluetooth function may be turned off manually by the user.

If at blocks 130a, 130b a motion signal is received from the other mobile phone, then at blocks 132a, 132b inquiries are made, e.g., a comparison is made, of the received signal representing motion of the other mobile phone and the motion of the instant mobile phone; and if they are substantially the same, then at blocks 134a, 134b secure communication is established between the two mobile phones 10, 12. With such secure communication established via Bluetooth, IR, WLAN or some other means, data (information, etc.) is transferred (block 136) between the respective mobile phones using SMS, MMS or some other transfer process, e.g., as was described above with respect to the steps at blocks 92-104 (Fig. 7). The transfer may be according the default data transfer instructions or selected data transfer instructions, e.g., as was described above with respect to Fig. 8. When the data transfer has been completed, the communication between the mobile phones 10, 12 may be terminated.

It will be appreciated that the flow charts 80, 120 are exemplary of operation of the invention and carrying out the method of the invention. Accordingly, various other steps, procedures, etc. may be used instead of or in addition to the steps and processes that are described above to achieve convenient and secure communication between mobile phones or other electronic equipment to transfer information, etc. therebetween.

As will be appreciated by one of ordinary skill in the art, computer program elements and/or circuitry elements of the invention may be embodied in hardware and/or in software (including firmware, resident software, micro-code, etc.). The invention may take the form of a computer program ' product, which can be embodied by a computer-usable or computer-readable storage medium having computer-usable or computer-readable program instructions, "code" or a "computer program" embodied in the medium for use by or in connection with the instruction execution system. In the context of this document, a computer-usable or computer-readable medium may be any medium that can contain, store, communicate, propagate, or transport the program for use by or in connection with the instruction execution system, apparatus, or device. The computer-usable or computer-readable medium may be, for example but not limited to, an electronic, magnetic, optical, electromagnetic, infrared, or semiconductor system, apparatus, device, or propagation medium such as the Internet. Note that the computer-usable or computer-readable medium could even be paper or another suitable medium upon which the program is printed; as the program can be electronically captured, via, for instance, optical scanning of the paper or other medium, then compiled, interpreted, or otherwise processed in a suitable manner. The computer program product and any software and hardware described herein form the various means for carrying out the functions of the invention in the example embodiments.

Although the invention has been shown and described with respect to certain preferred embodiments, it is obvious that equivalents and modifications will occur to others skilled in the art upon the reading and understanding of the specification. The present invention includes all such equivalents and modifications, and is limited only by the scope of the following claims.

## Claims

1. An electronic equipment (10,110), comprising
a transducer (60,62), wherein the transducer is operable to detect motion of the electronic equipment,
a transmitter (42,52) responsive to detected motion to transmit information from the electronic equipment,
a detector (42,52) responsive to a signal representative of motion of another electronic equipment, and
**characterized in that** said transmitter is responsive to a prescribed relationship between motion detected by said transducer and a signal representative of motion of another electronic equipment to identify another electronic equipment such that a communication channel is established between the correct electronic equipments and to transmit information with respect to such another electronic equipment via the established communication link, and
wherein the prescribed relationship is a common movement pattern of the electronic equipment and such another electronic equipment, and said transducer comprising a signal conditioning circuit to filter out signals representing motion not representative of intended motion of the electronic equipment, and said signal conditioning circuit comprising a low pass filter (64).

2. The electronic equipment of claim 1, wherein said electronic equipment is at least one of a mobile phone (10) and a PDA (110) and said another electronic equipment is at least one of a mobile phone (12) and a PDA (112).

3. The electronic equipment of claims 1-2, wherein said electronic equipment is a mobile phone and said another electronic equipment is a mobile phone.

4. The electronic equipment of claims 1-3, wherein the transducer is operable to detect shaking.

5. The electronic equipment of claims 1-4, said transducer comprising an accelerometer.

6. The electronic equipment of claims 1-5, said transmitter comprising at least one of a short distance transmitting device, a Bluetooth communication device, an infrared communication device, a WLAN communication device or a signal variation detector.

7. The electronic equipment of claims 1-6, further comprising a further electronic equipment, both said electronic equipment including detector circuitry operable to detect the occurrence of at least substantially the same motion of said electronic equipment to initiate a pairing of the electronic equipment, and wherein in response to such pairing said detector circuitry transfers information between electronic equipment.

8. The electronic equipment of claim 7, wherein said transferring information comprises transferring at least one of settings, contacts, address book, or contacts.

9. The electronic equipment of claims 1-8, wherein said transducer comprises an accelerometer and the motion comprises at least one of shaking, duration of motion, amplitude of motion, acceleration, and frequency of motion.

## Patentansprüche

1. Elektronische Ausrüstung (10, 110), umfassend
einen Wandler (60, 62), wobei der Wandler betreibbar ist, Bewegung der elektronischen Ausrüstung zu detektieren;
einen Sender (42, 52), der auf detektierte Bewegung reagibel ist, um Informationen aus der elektronischen Ausrüstung zu senden,
einen Detektor (42, 52), der auf ein für Bewegung einer anderen elektronischen Ausrüstung repräsentatives Signal reagibel ist, und
**dadurch gekennzeichnet, dass** der Sender reagibel auf eine vorbestimmte Beziehung zwischen der durch den Wandler detektierten Bewegung und einen für eine Bewegung einer anderen elektronischen Ausrüstung repräsentativen Signal reagibel ist, um eine andere elektronische Ausrüstung zu identifizieren, so dass ein Kommunikationskanal zwischen den korrekten elektronischen Ausrüstungen hergestellt wird, und Informationen in Bezug auf solch eine andere elektronische Ausrüstung über die hergestellte Kommunikationsverbindung zu senden, und
wobei die vorgegebene Beziehung ein übliches Bewegungsmuster der elektronischen Ausrüstung und solcher anderer elektronischer Ausrüstung ist und der Wandler eine Signalkonditionierungsschaltung umfasst, um Signale herauszufiltern, welche Bewegung repräsentieren, die nicht für die beabsichtigte Bewegung der elektronischen Ausrüstung repräsentativ ist, und die Signalkonditionierungsschaltung einen Tiefpassfilter (64) umfasst.

2. Elektronische Ausrüstung nach Anspruch 1, wobei die elektronische Ausrüstung ein Mobiltelefon (10) und/oder ein PDA (110) ist und die andere elektronische Ausrüstung ein Mobiltelefon (12) und/oder ein PDA (112) ist.

3. Elektronische Ausrüstung nach Ansprüchen 1 bis 2, wobei die elektronische Ausrüstung ein Mobiltelefon ist und die andere elektronische Ausrüstung ein Mobiltelefon ist.

4. Elektronische Ausrüstung nach Ansprüchen 1 bis 3, wobei der Wandler betreibbar ist, ein Schütteln zu detektieren.

5. Elektronische Ausrüstung nach Ansprüchen 1 bis 4, wobei der Wandler einen Beschleunigungsmesser umfasst.

6. Elektronische Ausrüstung nach Ansprüchen 1 bis 5, wobei der Sender zumindest eines umfasst von einer Kurzdistanz-Sendevorrichtung, einer Bluetooth-Kommunikationsvorrichtung, einer Infrarot-Kommunikationsvorrichtung, einer WLAN-Kommunikationsvorrichtung oder einem Signalvariationsdetektor.

7. Elektronische Ausrüstung nach Ansprüchen 1 bis 6, weiter umfassend eine weitere elektronische Ausrüstung, wobei beide elektronische Ausrüstungen Detektorschaltungskreise beinhalten, die betreibbar sind, das Auftreten zumindest der im Wesentlichen gleichen Bewegung der elektronischen Ausrüstung zu detektieren, um eine Paarung der elektronischen Ausrüstung zu initiieren, und wobei in Reaktion auf eine solche Paarung die Detektorschaltkreise Informationen zwischen der elektronischen Ausrüstung übertragen.

8. Elektronische Ausrüstung nach Anspruch 7, wobei das Übertragen von Information das Übertragen von Einstellungen, Kontakten, Adressbuch und/oder Kontakten umfasst.

9. Elektronische Ausrüstung nach Ansprüchen 1 bis 8, wobei der Wandler einen Beschleunigungsmesser umfasst und die Bewegung Schütteln, Dauer der Bewegung, Amplitude der Bewegung, Beschleunigung und/oder Frequenz der Bewegung umfasst.

## Revendications

1. Equipement électronique (10, 110), comprenant :
un transducteur (60, 62), le transducteur pouvant fonctionner de façon à détecter un déplacement de l'équipement électronique,
un émetteur (42, 52) réagissant au déplacement détecté de façon à transmettre une information à partir de l'équipement électronique,
un détecteur (42, 52) réagissant à un signal représentatif d'un déplacement d'un autre équipement électronique, et
**caractérisé en ce que** ledit émetteur réagit à une relation prescrite entre un déplacement détecté par ledit transducteur et un signal représentatif d'un déplacement d'un autre équipement électronique de façon à identifier un autre équipement électronique de telle sorte qu'un canal de communication soit établi entre les équipements électroniques corrects et à transmettre une information concernant cet autre équipement électronique par l'intermédiaire de la liaison de communication établie, et
dans lequel la relation prescrite est un motif de déplacement commun de l'équipement électronique et de cet autre équipement électronique, et ledit transducteur comprend un circuit de conditionnement du signal afin de filtrer des signaux représentant un déplacement non représentatif d'un déplacement prévu de l'équipement électronique, et ledit circuit de conditionnement du signal comprend un filtre passe-bas (64).

2. Equipement électronique selon la revendication 1, dans lequel ledit équipement électronique est au moins l'un parmi un téléphone portable (10) et un assistant numérique personnel (110), et ledit autre dispositif électronique est au moins l'un parmi un téléphone portable (12) et un assistant numérique personnel (112).

3. Equipement électronique selon les revendications 1 à 2, dans lequel ledit équipement électronique est un téléphone portable et ledit autre équipement électronique est un téléphone portable.

4. Equipement électronique selon les revendications 1 à 3, dans lequel le transducteur peut fonctionner de façon à détecter un tremblement.

5. Equipement électronique selon les revendications 1 à 4, ledit transducteur comprenant un accéléromètre.

6. Equipement électronique selon les revendications 1 à 5, ledit émetteur comprenant au moins l'un parmi un dispositif de transmission à courte distance, un dispositif de communication Bluetooth, un dispositif de communication à infrarouges, un dispositif de communication à grand réseau ou un détecteur de variation de signal.

7. Equipement électronique selon les revendications 1 à 6, comprenant de plus un autre équipement électronique, tous lesdits équipements électroniques comprenant des circuits de détecteur pouvant fonctionner de façon à détecter l'apparition d'au moins sensiblement le même déplacement dudit équipement électronique de façon à déclencher un appariement de l'équipement électronique, et dans lequel, en réponse à cet appariement, lesdits circuits de détecteur transfèrent une information entre les équipements électroniques.

8. Equipement électronique selon la revendication 7, dans lequel ladite information de transfert comprend le transfert d'au moins l'un parmi des réglages, des contacts, un carnet d'adresses, ou des contacts.

9. Equipement électronique selon les revendications 1 à 8, dans lequel ledit transducteur comprend un accéléromètre et le déplacement comprend au moins l'un parmi une agitation, une durée de déplacement, une amplitude de déplacement, une accélération, et une fréquence de déplacement.
